# EUROPÄISCHE PATENTANMELDUNG

(11) **EP 2 801 516 A1**
(43) Veröffentlichungstag der Anmeldung: **12.11.2014**
(21) Anmeldenummer: 14164849.3
(22) Anmeldetag: 16.04.2014
(51) Int. Cl.: B62M 11/18, B62M 7/12

(54) **Schaltanordnung für ein elektrisch betriebenes Zweirad sowie Zweirad**

(30) Priorität: 06.05.2013 DE 102013208220
(71) Anmelder: ROBERT BOSCH GMBH, 70442 Stuttgart (DE)
(72) Erfinder: Stubner, Armin, 77815 Buehl-Altschweier (DE); Dommsch, Hans-Peter, 77839 Lichtenau (DE); Cheng, Fengmei, 68167 Mannheim (DE); Martin, Norbert, 77855 Achern (DE); Demont, Stefan, 77815 Buehl (DE)

(57) **Zusammenfassung**

Die Erfindung betrifft Schaltanordnung (11) für ein Antriebsrad (3) eines Zweirads, umfassend:
- ein erstes Planetengetriebe (20) mit einem ersten Sonnenrad (21), ersten Planetenrädern (22) und einem ersten Hohlrad (23), die sich miteinander in Eingriff befinden;
- ein zweites Planetengetriebe (30) mit einem zweiten Sonnenrad (31), zweiten Planetenrädern (32) und einem zweiten Hohlrad (33), die sich miteinander in Eingriff befinden;
- eine Motorwelle (15), die fest mit dem ersten und zweiten Sonnenrad (21, 31) gekoppelt ist;
- eine Abtriebswelle (12), die fest mit den ersten und den zweiten Planetenrädern (22, 32) gekoppelt ist, so dass eine Umlaufbewegung der Planetenräder (22, 32) um das entsprechende Sonnenrad (21, 31) auf die Abtriebswelle (12) gekoppelt ist;
- eine erste Kupplungseinrichtung (25), die an dem ersten Planetengetriebe (20) angeordnet ist, um das erste Hohlrad (23) zum Auswählen einer Momentenübertragung durch das erste Planetengetriebe (20) zu blockieren oder freizugeben; und
- eine zweite Kupplungseinrichtung (35), die an dem zweiten Planetengetriebe (30) angeordnet ist, um das zweite Hohlrad (33) zum Auswählen einer Momentenübertragung durch das zweite Planetengetriebe (30) zu blockieren oder freizugeben.

## Beschreibung

### Technisches Gebiet

Die vorliegende Erfindung betrifft elektrisch betriebene Zweiräder, so genannte E-Scooter, und insbesondere solche, die mit einem Schaltgetriebe ausgestattet sind.

### Stand der Technik

Elektrisch betriebene Zweiräder, wie beispielsweise Elektroroller oder E-Scooter, können zum einen mit einem in der Hinterradnabe vorgesehenen Antriebsmotor und zum anderen mit einem separaten rahmen- oder schwingenfest angeordneten Antriebsmotor realisiert sein. In letzterer Weise angeordnete Antriebsmotoren können dann mithilfe einer geeigneten Untersetzung mit dem Hinterrad gekoppelt sein.

Derartige Untersetzungen bieten zumeist keinen Gangwechsel an, sondern sind als Ein-Gang-Versionen ausgeführt.

Eingängig ausgeführte Elektroroller haben den Nachteil, dass zum Erreichen ausreichender Anfahrmomente der Einsatz drehmomentenstarker Antriebsmotoren erforderlich ist, die jedoch in mehr als 70% ihrer Zyklusbetriebszeiten im Teil-lastbereich betrieben werden müssten. Im Teillastbereich weisen Elektroantriebe in der Regel einen geringen Wirkungsgrad auf, so dass trotz effizienter Elektromotoren mit Spitzenwirkungsgraden von bis zu 95% die tatsächlich erreichten Zykluswirkungsgrade deutlich unter 80% liegen.

Es ist daher Aufgabe der vorliegenden Erfindung, ein Zweirad zur Verfügung zu stellen, das einen verbesserten Zykluswirkungsgrad aufweist.

### Offenbarung der Erfindung

Erfindungsgemäß wird diese Aufgabe durch die Schaltanordnung für ein Antriebsrad eines Zweirads gemäß Anspruch 1 sowie durch die Antriebsanordnung, das Zweirad und das Verfahren gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist eine Schaltanordnung für ein Antriebsrad eines Zweirads vorgesehen, umfassend:
- ein erstes Planetengetriebe mit einem ersten Sonnenrad, ersten Planetenrädern und einem ersten Hohlrad, die sich miteinander in Eingriff befinden;
- ein zweites Planetengetriebe mit einem zweiten Sonnenrad, zweiten Planetenrädern und einem zweiten Hohlrad, die sich miteinander in Eingriff befinden;
- eine Motorwelle, die fest mit dem ersten und zweiten Sonnenrad gekoppelt ist;
- eine Abtriebswelle, die fest mit den ersten und den zweiten Planetenrädern gekoppelt ist, so dass eine Umlaufbewegung der Planetenräder um das entsprechende Sonnenrad auf die Abtriebswelle gekoppelt ist;
- eine erste Kupplungseinrichtung, die an dem ersten Planetengetriebe angeordnet ist, um das erste Hohlrad zum Auswählen einer Momentenübertragung durch das erste Planetengetriebe zu blockieren oder freizugeben; und
- eine zweite Kupplungseinrichtung, die an dem zweiten Planetengetriebe angeordnet ist, um das zweite Hohlrad zum Auswählen einer Momentenübertragung durch das zweite Planetengetriebe zu blockieren oder freizugeben.

Eine Idee der obigen Schaltanordnung besteht darin, diese räumlich zwischen einer Motorwelle eines Antriebsmotors und der Abtriebswelle anzuordnen. Die Schaltanordnung ist als schaltbares Mehrganggetriebe, insbesondere als Zweiganggetriebe, ausgebildet und weist ein erstes Planetengetriebe und ein zweites Planetengetriebe auf.

Durch Einsatz einer Schaltanordnung für ein Zweiganggetriebe kann theoretisch bei entsprechender Auslegung der Antriebsmotoren und der verfügbaren Untersetzungen der Zykluswirkungsgrad und damit die Reichweite um bis zu 10% erhöht werden. Durch die auf diese Weise ermöglichte höhere Untersetzung kann gleichzeitig der Antriebsmotor zum Bereitstellen eines geringeren Anfahrdrehmoments ausgelegt werden, was sowohl eine Gewichtseinsparung als auch eine Verbesserung des Zykluswirkungsgrads mit sich bringt.

Die obige Schaltanordnung hat den Vorteil, dass die Fahrstufenauswahl durch Blockieren des entsprechenden Hohlrades des der jeweiligen Fahrstufe zugeordneten Planetengetriebes durchgeführt werden kann, während das jeweils andere Hohlrad freigegeben ist.

Dadurch lässt sich eine Schaltanordnung mit einem geringen Bauraum realisieren.
Weiterhin können die Kupplungseinrichtungen jeweils mindestens eine Blockiereinrichtung aufweisen, die zum Zusammenwirken der jeweiligen Kupplungseinrichtung mit einer äußeren Mantelfläche des Hohlrads des zugeordneten Planetengetriebes ausgebildet ist.

Insbesondere können die Kupplungseinrichtungen jeweils zwei schwenkbare Zangenarme aufweisen, zwischen denen das jeweilige Hohlrad aufgenommen ist, wobei die Zangenarme jeder Kupplungseinrichtung zum Klemmen oder Freigeben des jeweiligen Hohlrads betätigbar sind.

Gemäß einer Ausführungsform können die Kupplungseinrichtungen jeweils mindestens eine Blockiereinrichtung aufweisen, die zum Zusammenwirken der jeweiligen Kupplungseinrichtung mit einer dem benachbarten Planetengetriebe gegenüberliegenden Seitenfläche des Hohlrads des zugeordneten Planetengetriebes ausgebildet ist.

Weiterhin können die Kupplungseinrichtungen jeweils einen Blockierring zum Aufpressen auf die entsprechende Seitenfläche aufweisen, wobei der Blockierring jeder Kupplungseinrichtung zum Blockieren oder Freigeben des jeweiligen Hohlrads betätigbar ist.

Weiterhin können die erste Kupplungseinrichtung und die zweite Kupplungseinrichtung ein gemeinsames Stellglied aufweisen, das ausgebildet ist, um in einer ersten Stellung das erste Hohlrad zu blockieren und eine freie Drehung des zweiten Hohlrads zuzulassen und in einer zweiten Stellung das zweite Hohlrad zu blockieren und eine freie Drehung des ersten Hohlrads zuzulassen. Auf diese Weise wird ein gleichzeitiges Einlegen einer ersten und einer zweiten Fahrstufe ausgeschlossen.

Gemäß einer Ausführungsform kann das erste Planetengetriebe eine erste Untersetzung aufweisen, die höher ist als eine zweite Untersetzung des zweiten Planetengetriebes.

Es kann vorgesehen sein, dass das gemeinsame Stellglied ausgebildet ist, um in einer Zwischenstellung zwischen der ersten Stellung und der zweiten Stellung weder das erste noch das zweite Hohlrad zu blockieren.

Weiterhin können die Kupplungseinrichtungen jeweils mindestens eine Kupplungsbacke aufweisen, die zum Zusammenwirken mit einer äußeren Mantelfläche des Hohlrads oder mit einer dem benachbarten Planetengetriebe gegenüberliegenden Seitenfläche des Hohlrads des zugeordneten Planetengetriebes ausgebildet ist.

Gemäß weiteren Ausführungsformen können die Kupplungseinrichtungen jeweils mindestens eine Haltezahnreihe aufweisen, die zum Zusammenwirken mit einer entsprechenden Zahnreihe an der äußeren Mantelfläche des Hohlrads oder mit einer Zahnreihe an der dem benachbarten Planetengetriebe gegenüberliegenden Seitenfläche des Hohlrads des zugeordneten Planetengetriebes ausgebildet ist.

Gemäß einem weiteren Aspekt ist eine Antriebsanordnung für ein Zweirad vorgesehen, umfassend:
- einen Antriebsmotor;
- die obige Schaltanordnung, die an dem Antriebsmotor angeordnet ist; und
- eine Sekundäruntersetzung, um eine Abtriebswelle der Schaltanordnung mit einem Antriebsrad zu koppeln.

Durch die Sekundäruntersetzung kann die Gesamtuntersetzung an unterschiedliche Durchmesser einer Antriebsradfelge angepasst werden, ohne dass dazu verschiedene Varianten von Schaltanordnungen vorgesehen werden müssen.

Weiterhin ist es möglich die Antriebsanordnung versetzt zum Antriebsrad, beispielsweise an einer Hinterradtriebschwinge, anzuordnen und mithilfe der Sekundäruntersetzung, wie beispielsweise einer Kette oder eines Zahnriemens, mit dem Antriebsrad zu koppeln.

Man kann Elektroroller mit Zweiganggetrieben vorsehen, bei denen die Fahrstufenwahl in vorwiegend stirnverzahnten Getrieben erfolgt, die gemeinsam mit dem Antriebsmotor unmittelbar am Hinterrad positioniert sind. Eine solche Anordnung führt jedoch zu einer unerwünschten Asymmetrie der Gewichtsverteilung im Bereich des Hinterrads. Weiterhin kann nur eine der Fahrstufen verwendet werden, wenn der Aktuator währenddessen mit einem kontinuierlichen Haltestrom beaufschlagt wird, wodurch die Energieaufnahme erhöht ist.

Weiterhin kann die Antriebsanordnung an einer Hinterradschwinge, insbesondere zwischen Schwingarmen der Hinterradschwinge, angeordnet sein.

Gemäß einem weiteren Aspekt ist ein Zweirad mit einem an einer Hinterradschwinge angeordneten Antriebsrad vorgesehen, das mit der obigen Antriebsanordnung gekoppelt ist.

Gemäß einem weiteren Aspekt ist ein Verfahren zum Schalten der obigen Schaltanordnung vorgesehen, wobei zum Schalten das erste Hohlrad in einer ersten Stellung blockiert und eine freie Drehung des zweiten Hohlrads zugelassen wird und in einer zweiten Stellung das zweite Hohlrad blockiert und eine freie Drehung des ersten Hohlrads zugelassen wird.

Weiterhin kann ein Stellelement zwischen der ersten Stellung und der zweiten Stellung bewegt werden, wobei eine Zwischenstellung zwischen der ersten Stellung und der zweiten Stellung zum Einlegen eines Leerlaufs ausgewählt wird.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung einer Hinterradschwinge für ein elektrisch betriebenes Zweirad;
- Figuren 2a bis 2c: eine Schaltanordnung für ein Zweirad bei eingelegter erster Fahrstufe, eingelegtem Leerlauf bzw. eingelegter zweiter Fahrstufe;
- Figur 3: eine perspektivische Darstellung einer Schaltanordnung;
- Figuren 4a und 4b: antriebsseitige und abtriebsseitige Draufsichten auf die Schaltanordnung der Figur 3;
- Figuren 5a bis 5c: eine schematische Darstellung einer weiteren Schaltanordnung bei eingelegter ersten Fahrstufe, eingelegtem Leerlauf bzw. eingelegter zweiter Fahrstufe; und
- Figur 6: eine Seitenansicht einer Schalteinrichtung zum Auswählen der entsprechenden Fahrstufen.

### Beschreibung von Ausführungsformen

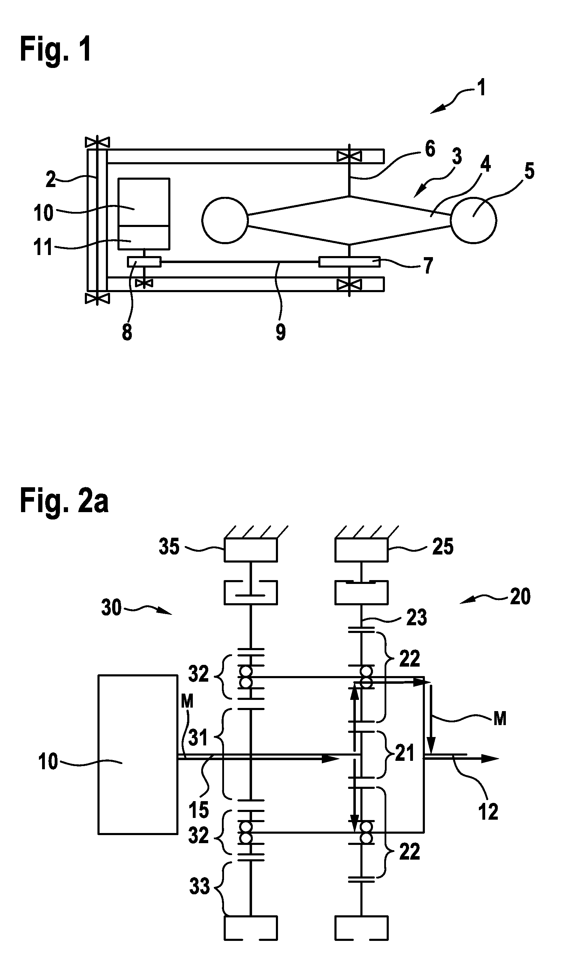

Figur 1 zeigt eine schematische Darstellung einer Hinterradschwinge 1 eines Zweirads, insbesondere eines elektrisch betriebenen Scooters. Die Hinterradschwinge 1 weist eine Schwingachse 2 auf, um die die Hinterradschwinge 1 schwenkbar gelagert ist. Die Hinterradschwinge 1 ist mit einer Feder beaufschlagt, um eine Federung des Zweirads zu realisieren (nicht gezeigt).

An einem der Schwingachse 2 gegenüberliegenden Ende der Hinterradschwinge 1 ist ein Antriebsrad 3 mit einer Radfelge 4 und einem Reifen 5 angeordnet. Das Antriebsrad 3 des Zweirads ist an einer Hinterradwelle 6 angeordnet, die zwischen zwei Schwingenarmen gelagert an der Hinterradschwinge 1 gehalten ist. Die Hinterradschwinge 1 ist im gezeigten Beispiel als Zweiarmschwinge ausgeführt, wobei in Verbindung mit der vorliegenden Erfindung grundsätzlich auch Einarmschwingen eingesetzt werden können.

Die Hinterradwelle 6 trägt axial versetzt zu dem Antriebsrad 3 weiterhin ein hinteres Kettenrad 7, das alternativ auch als eine hintere Riemenscheibe ausgebildet sein kann. Das hintere Kettenrad 7 ist mit einem Ritzel 8 über eine Kette 9 gekoppelt. Es kann jeweils anstelle des Ritzels 8 eine vordere Riemenscheibe und anstelle der Kette 9 ein Zahnriemen vorgesehen sein. Das Ritzel 8 bzw. die vordere Riemenscheibe, die Kette 9 bzw. der Zahnriemen und das hintere Kettenrad 7 bzw. die hintere Riemenscheibe bilden eine Sekundäruntersetzung zur Kopplung des Antriebsmotors 10 mit dem Antriebsrad 3.

Es ist ein Antriebsmotor 10 vorgesehen, der vorzugsweise zwischen den Schwingenarmen an der Hinterradschwinge 1 befestigt ist und eine Motorwelle aufweist. Der Antriebsmotor 10 ist so angeordnet, dass die Motorwelle vorzugsweise achsparallel zur Hinterradwelle 6 angeordnet ist. Der Antriebsmotor 10 ist vorzugsweise als Elektromotor ausgebildet und wird von einer (nicht gezeigten) elektrischen Energiequelle über eine Steuereinheit zum Einstellen des bereitzustellenden Antriebsmoments gespeist. Zwischen dem Antriebsmotor 10 und dem Ritzel 8 ist unmittelbar am Antriebsmotor 10 ein Schaltgetriebe 11 (Schaltanordnung) vorgesehen, dessen Abtriebswelle 12 mit dem Ritzel 8 bzw. der vorderen Riemenscheibe verbunden ist.

Das Schaltgetriebe 11 wird vorzugsweise kompakt mit dem Antriebsmotor 10 verbaut, wobei eine Anpassung des Antriebssystems an verschiedene Durchmesser eines Antriebsrads 3 durch Anpassung der Sekundäruntersetzung 7, 8, 9 vorgesehen wird.

Das Schaltgetriebe 11 ist in den schematischen Darstellungen der Figuren 2a bis 2c detaillierter gezeigt. Das Schaltgetriebe 11 ist als Zweiganggetriebe ausgebildet, das ein erstes Planetengetriebe 20 und ein zweites Planetengetriebe 30 aufweist. Das erste Planetengetriebe 20 weist ein erstes Sonnenrad 21, mehrere das erste Sonnenrad 21 umlaufende erste Planetenräder 22 und ein erstes die ersten Planetenräder 22 umlaufendes Hohlrad 23 auf. Die ersten Planetenräder 22, das erste Sonnenrad 21 und das erste Hohlrad 23 sind als Zahnräder ausgebildet, wobei die ersten Planetenräder 22 mit dem ersten Sonnenrad 21 und dem ersten Hohlrad 23 in Eingriff stehen.

Analog weist das zweite Planetengetriebe 30 ein zweites Sonnenrad 31, mehrere das zweite Sonnenrad 31 umlaufende zweite Planetenräder 32 und ein zweites die zweiten Planetenräder 32 umlaufendes Hohlrad 33 auf. Die zweiten Planetenräder 32, das zweite Sonnenrad 31 und das zweite Hohlrad 33 sind als Zahnräder ausgebildet, wobei die zweiten Planetenräder 32 mit dem zweiten Sonnenrad 31 und dem zweiten Hohlrad 33 in Eingriff stehen.

Der Antriebsmotor 10 ist über seine Motorwelle 15 fest mit dem ersten und zweiten Sonnenrad 21, 31 verbunden. Die Abtriebswelle 12 ist mit den Achsen der ersten und zweiten Planetenräder 22, 32 fest gekoppelt, z. B. über jeweilige die Planetenräder tragende Haltescheiben, so dass ein Umlaufen der Planetenräder 22, 32 um das betreffende Sonnenrad 21, 31 eine Drehung der Abtriebswelle 12 bewirkt.

Das erste Sonnenrad 21 weist einen kleineren Durchmesser auf als das zweite Sonnenrad 31. Entsprechend sind die ersten Planetenräder 22 mit größerem Durchmesser ausgebildet als die zweiten Planetenräder 32 und das erste Hohlrad 23 weist einen größeren Innendurchmesser auf als das zweite Hohlrad 33. Dadurch liegt für das erste Planetengetriebe 20 eine höhere Untersetzung vor als für das zweite Planetengetriebe 30. Folglich dient die Funktion des ersten Planetengetriebes 20 zur Realisierung einer ersten niedrigen Fahrstufe und die Funktion des zweiten Planetengetriebes 30 zur Realisierung einer zweiten höheren Fahrstufe.

Das erste Hohlrad 23 des ersten Planetengetriebes 20 ist mit einer schaltbaren ersten Kupplungseinrichtung 25 versehen, die bei einem Schaltvorgang eine Drehung des ersten Hohlrads 23 zulassen bzw. das erste Hohlrad 23 blockieren kann.

Analog ist das zweite Hohlrad 33 des zweiten Planetengetriebes 30 mit einer schaltbaren zweiten Kupplungseinrichtung 35 versehen, die bei einem Schaltvorgang eine Drehung des zweiten Hohlrads 23 zulassen bzw. das zweite Hohlrad 23 blockieren kann.

In Figur 2a ist ein Fall dargestellt, in dem die erste schaltbare Kupplungseinrichtung 25 das erste Hohlrad 23 blockiert und die zweite schaltbare Kupplung 35 eine Drehung des zweiten Hohlrads 33 zulässt. Dadurch wird von dem Antriebsmotor 10 entlang des in der Figur 2a mit M gekennzeichneten Verlaufs der Pfeile ein Moment auf eine Abtriebswelle 12 übertragen.

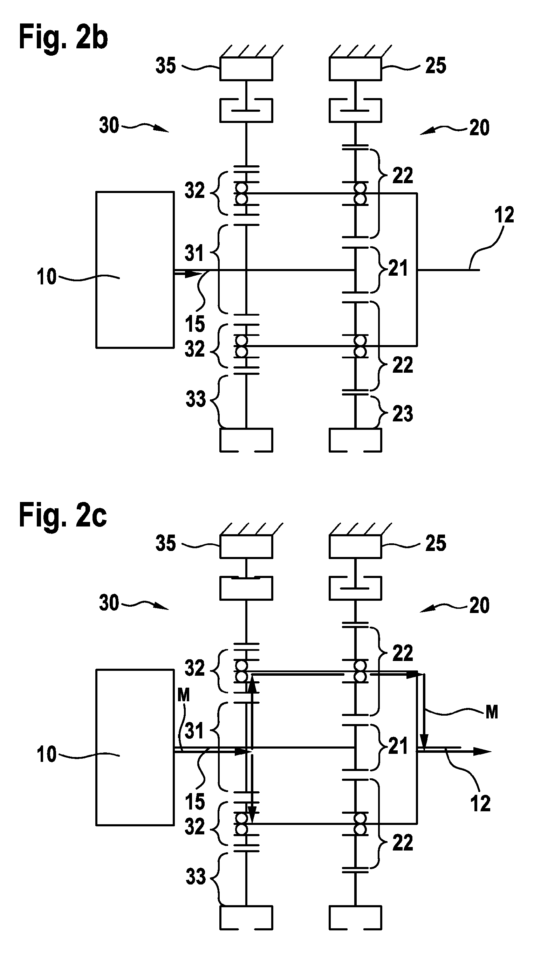

Analog zur Figur 2a ist in Figur 2b ein Fall dargestellt, in dem keine Fahrstufe ausgewählt ist, d. h. beide schaltbaren Kupplungseinrichtungen 25, 35 sind geöffnet und die zugeordneten Hohlräder 23, 33 sind nicht blockiert.

In Figur 2c ist ein Fall dargestellt, in dem die zweiten Fahrstufe eingelegt ist, d. h. die zweite schaltbare Kupplungseinrichtung 35 blockiert das zweite Hohlrad 33, während die erste schaltbare Kupplungseinrichtung 25 die Drehung des ersten Hohlrads 23 zulässt. Der Verlauf des auf die Abtriebswelle 12 übertragenen Moments ist durch die mit M gekennzeichneten Pfeile dargestellt.

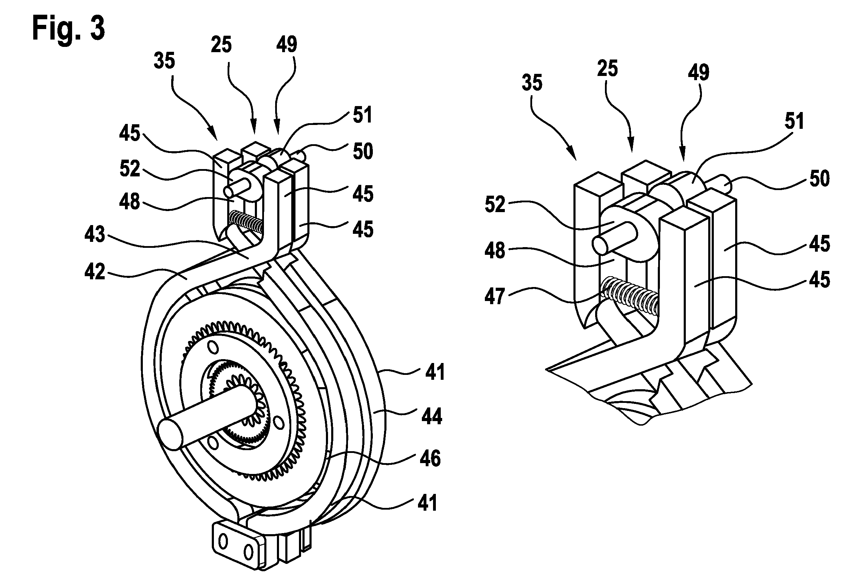

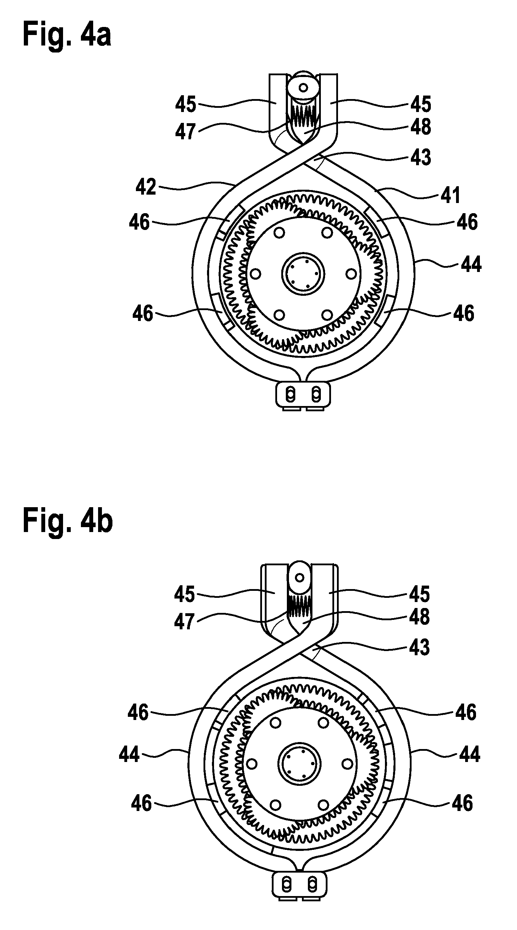

In der in den Figuren 2a bis 2c dargestellten Ausführungsform erfolgt die Blockierung der Hohlräder 23, 33 durch eine Beaufschlagung mit Kupplungsbacken an ihrer äußeren Mantelfläche mittels einer Schalteinrichtung, wie sie in den Figuren 3 und 4a und 4b dargestellt ist.

Mit Bezug auf die Figuren 3, 4a, und 4b ist jedem der Planetengetriebe 20, 30 eine Kupplungszange 40 mit jeweils zwei Zangenarmen 41, 42 zugeordnet, die mit einem Ende schwenkbeweglich angeordnet sind und das entsprechende Hohlrad 23, 33 des zugeordneten Planetengetriebes 20, 30 einschließen. Die Zangenarme 41, 42 sind in einem Abschnitt 43 im Wesentlichen halbkreisförmig ausgebildet und überkreuzen sich so, dass die betreffenden Hohlräder 23, 33 zwischen dem einen Ende und der Überkreuzungsstelle 44 zwischen den Zangenarmen 41, 42 aufgenommen sind. Nach der Überkreuzungsstelle 44 weisen die Zangenarme 41, 42 jeweils einen Stellabschnitt 45 auf. Die Stellabschnitte 45 stehen radial von dem durch die beiden halbkreisförmigen Abschnitte 43 der jeweiligen Zangenarme 41, 42 gebildeten Kupplungszange 40 ab und sind voneinander beabstandet.

An den Innenseiten der halbkreisförmigen Abschnitte 43 ist jeweils mindestens eine Blockiereinrichtung in Form einer Kupplungsbacke 46 angeordnet. Der Abstand der Stellabschnitte 45 voneinander bestimmt eine Beaufschlagung der äußeren Mantelfläche des Hohlrads 23, 33 des zugeordneten Planetengetriebes 20, 30 mit den Kupplungsbacken 46 an den Zangenarmen 41, 42. Ein Vergrößern des Abstands zwischen den Stellabschnitten 45 bewirkt, dass die Kupplungsbacken 46 der Zangenarme 41, 42 auf die Mantelfläche des betreffenden Hohlrads 23, 33 gedrückt werden und dadurch das betreffende Hohlrad 23, 33 blockieren. Ein entsprechendes Verkleinern des Abstands zwischen den Stellabschnitten 45 der Zangenarme 41, 42 an dem entsprechenden Planetengetriebe 20, 30 bewirkt entsprechend ein Freigeben des betreffenden Hohlrads 23, 33, so dass dieses frei drehen kann.

Die Stellabschnitte 45 der jeweiligen Kupplungseinrichtung 25, 35 sind mit einer Federeinrichtung 47 beaufschlagt, die zwischen den Stellabschnitten 45 der Zangenarme 41, 42 eine aufeinander zu gerichtete Zugkraft bewirkt. Insbesondere kann zwischen den beiden Stellabschnitten 45 eine Spiralfeder unter einer Vorspannung angeordnet sein.

Die beiden Planetengetriebe 20, 30, die in axialer Richtung zueinander benachbart angeordnet sind, sind jeweils mit der entsprechenden Kupplungseinrichtung 25, 35 versehen, die jeweils mit den Zangenarmen 41, 42 gebildet ist und deren Stellabschnitte 45 sich im Wesentlichen parallel zueinander erstrecken. Die zwischen den jeweiligen Stellabschnitten 45 der beiden Kupplungseinrichtungen 25, 35 gebildeten Zwischenbereiche 48 überdecken sich daher in axialer Richtung der Planetengetriebe 20, 30.

Zur Betätigung der Kupplungseinrichtungen 25, 35 ist in den Zwischenbereichen 48 ein Nockenstellglied 49 vorgesehen, das eine Stellwelle 50 aufweist, an der ein erstes Stellelement 51 für die erste Kupplungseinrichtung 25 und ein zweites Stellelement 52 für die zweite Kupplungseinrichtung 35 angeordnet sind. Die beiden Stellelemente 51, 52 sind beispielsweise mit einem ovalen bzw. nicht runden Querschnitt bezüglich der axialen Richtung ausgebildet und sind so an der Stellwelle 50 angeordnet, dass diese jeweils in einer ersten Ausrichtung die Stellabschnitte 45 auseinander drückt, um die entsprechenden Kupplungsbacken 46 der zugeordneten Kupplungseinrichtung 25, 35 auf das betreffende Hohlrad 23, 33 zu pressen, und in einer weiteren, insbesondere um 90 ° dazu versetzten, Stellung einen geringeren Abstand zwischen den Stellabschnitten 45 zulassen, bei dem die Kupplungsbacken 46 nicht auf das betreffende Hohlrad 23, 33 drücken. Die beiden Stellelemente 51, 52 sind so an der Stellwelle 50 angeordnet, dass sie versetzt zueinander die Stellabschnitte 45 der beiden Kupplungseinrichtungen 25, 35 auseinander drücken. Auf diese Weise kann immer nur eines der Hohlräder 23, 33 durch die Kupplungsbacken 46 der entsprechenden Kupplungseinrichtung 25, 35 festgehalten werden.

In den Figuren 4a und 4b sind die Vorder- und Rückseite der Schaltanordnung dargestellt. Man erkennt, dass bei der gezeigten Ausrichtung der Stellelemente 51, 52 das erste Hohlrad 23 festgehalten wird und das zweite Hohlrad 33 frei drehen kann und somit die erste Fahrstufe ausgewählt ist. Bei Zwischenstellungen der Stellwelle 50, in denen weder das erste noch das zweite Stellelement 51, 52 die betreffenden Stellabschnitte vollständig auseinander gedrückt hat, kommt es zu einer Freigängigkeit beider Hohlräder 23, 33, was einem Leerlauf entspricht.

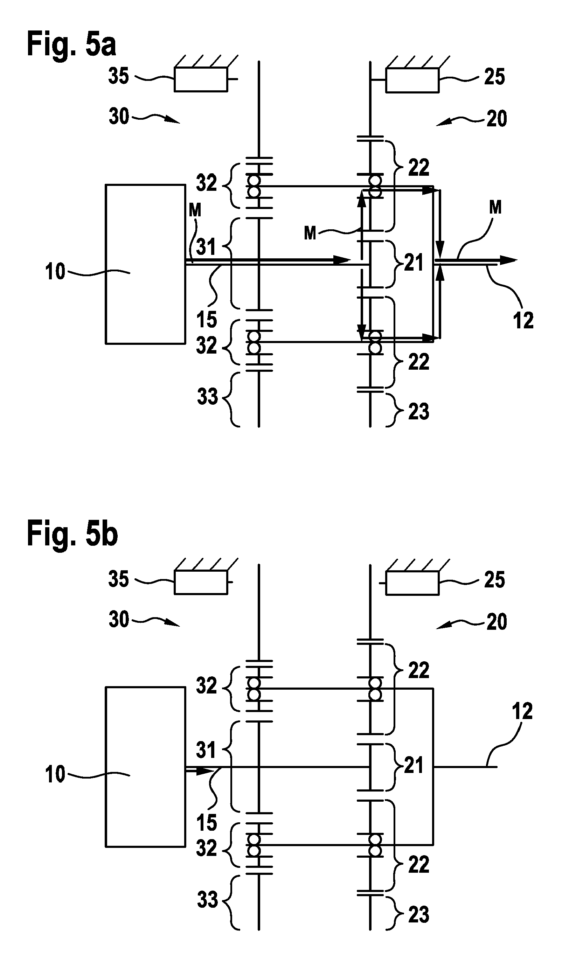

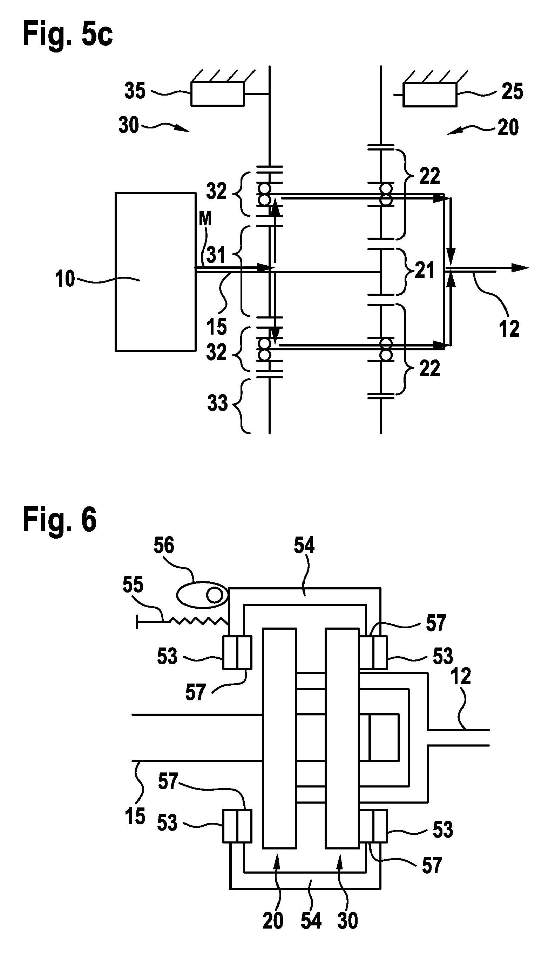

Die Figuren 5a bis 5c zeigen analog zu den Figuren 2a bis 2c eine weitere Ausführungsform einer schematisch dargestellten Schaltanordnung. Die Schaltanordnung der Figuren 5a bis 5c unterscheidet sich von der Schaltanordnung der Figuren 2a bis 2c dadurch, dass die Kupplungseingriffe durch eine Blockiereinrichtung seitlich auf die Hohlräder 23, 33 des betreffenden Planetengetriebes 20, 30 erfolgen und nicht auf deren äußere Mantelfläche.

In Figur 6 ist eine mögliche Ausführungsform dargestellt, bei der der dem benachbarten Hohlrad 23, 33 der jeweils anderen Kupplungseinrichtung gegenüberliegenden Seitenfläche ein jeweiliger Bremsring 53 als Blockiereinrichtung gegenüberliegt, der ringförmig und koaxial zu dem betreffenden Hohlrad 23, 33 angeordnet ist. Die Bremsringe 53 lassen sich koaxial verschieben und sind über eine Stellspange 54 miteinander gekoppelt, die durch ein Stellelement 56 beaufschlagt werden kann. Die Stellspange 54 ist mithilfe einer Federeinrichtung 55 mit einer Vorspannung belegt, die die Stellspange 54 gegen das Stellelement 56 zieht.

Das Stellelement 56 ist, wie vorstehend beschrieben, nockenförmig ausgebildet und ermöglicht es so, abhängig von seiner Rotationsstellung eine Verschiebung der Bremsringe 53 in axialer Richtung zu definieren. Die Bremsringe 53 können Kupplungsbacken 57 aufweisen, die auf eine glatte Seitenfläche der Hohlräder 23, 33 wirken.

Alternativ können die Bremsringe 53 bzw. Kupplungsbacken 57, die die Blockiereinrichtung bilden, auch mit Zähnen vorgesehen sein, die in entsprechende Zähne an der Seitenfläche der Hohlräder 23, 33 eingreifen können, sobald der betreffende Bremsring 53 mit diesen in Eingriff gelangt.

## Patentansprüche

1. Schaltanordnung (11) für ein Antriebsrad (3) eines Zweirads, umfassend:
- ein erstes Planetengetriebe (20) mit einem ersten Sonnenrad (21), ersten Planetenrädern (22) und einem ersten Hohlrad (23), die sich miteinander in Eingriff befinden;
- ein zweites Planetengetriebe (30) mit einem zweiten Sonnenrad (31), zweiten Planetenrädern (32) und einem zweiten Hohlrad (33), die sich miteinander in Eingriff befinden;
- eine Motorwelle (15), die fest mit dem ersten und zweiten Sonnenrad (21, 31) gekoppelt ist;
- eine Abtriebswelle (12), die fest mit den ersten und den zweiten Planetenrädern (22, 32) gekoppelt ist, so dass eine Umlaufbewegung der Planetenräder (22, 32) um das entsprechende Sonnenrad (21, 31) auf die Abtriebswelle (12) gekoppelt ist;
- eine erste Kupplungseinrichtung (25), die an dem ersten Planetengetriebe (20) angeordnet ist, um das erste Hohlrad (23) zum Auswählen einer Momentenübertragung durch das erste Planetengetriebe (20) zu blockieren oder freizugeben; und
- eine zweite Kupplungseinrichtung (35), die an dem zweiten Planetengetriebe (30) angeordnet ist, um das zweite Hohlrad (33) zum Auswählen einer Momentenübertragung durch das zweite Planetengetriebe (30) zu blockieren oder freizugeben.

2. Schaltanordnung (11) nach Anspruch 1, wobei die Kupplungseinrichtungen (25, 35) jeweils mindestens eine Blockiereinrichtung (53) aufweisen, die zum Zusammenwirken der jeweiligen Kupplungseinrichtung (25, 35) mit einer äußeren Mantelfläche des Hohlrads (23, 33) des zugeordneten Planetengetriebes (20, 30) ausgebildet ist.

3. Schaltanordnung (11) nach Anspruch 2, wobei die Kupplungseinrichtungen (25, 35) jeweils zwei schwenkbare Zangenarme (41, 42) aufweisen, zwischen denen das jeweilige Hohlrad (23, 33) aufgenommen ist, wobei die Zangenarme (41, 42) jeder Kupplungseinrichtung (25, 359 zum Klemmen oder Freigeben des jeweiligen Hohlrads (23, 33) betätigbar sind.

4. Schaltanordnung (11) nach Anspruch 1, wobei die Kupplungseinrichtungen (25, 35) jeweils mindestens eine Blockiereinrichtung aufweisen, die zum Zusammenwirken der jeweiligen Kupplungseinrichtung (25, 35) mit einer dem benachbarten Planetengetriebe (20, 30) gegenüberliegenden Seitenfläche des Hohlrads (23, 33) des zugeordneten Planetengetriebes (20, 30) ausgebildet ist.

5. Schaltanordnung (11) nach Anspruch 4, wobei die Kupplungseinrichtungen (25, 35) jeweils einen Blockierring zum Aufpressen auf die entsprechende Seitenfläche aufweisen, wobei der Blockierring jeder Kupplungseinrichtung (25, 35) zum Blockieren oder Freigeben des jeweiligen Hohlrads (23, 33) betätigbar ist.

6. Schaltanordnung (11) nach einem der Ansprüche 1 bis 5, wobei die erste Kupplungseinrichtung (25) und die zweite Kupplungseinrichtung (35) ein gemeinsames Stellglied (49) aufweisen, das ausgebildet ist, um in einer ersten Stellung das erste Hohlrad (23) zu blockieren und eine freie Drehung des zweiten Hohlrads (33) zuzulassen und in einer zweiten Stellung das zweite Hohlrad (33) zu blockieren und eine freie Drehung des ersten Hohlrads (23) zuzulassen.

7. Schaltanordnung (11) nach Anspruch 6, wobei das gemeinsame Stellglied (49) ausgebildet ist, um in einer Zwischenstellung zwischen der ersten Stellung und der zweiten Stellung weder das erste noch das zweite Hohlrad (23, 33) zu blockieren.

8. Antriebsanordnung für ein Zweirad, umfassend:
- einen Antriebsmotor (10);
- eine Schaltanordnung (11) nach einem der Ansprüche 1 bis 7, die an dem Antriebsmotor (10) angeordnet ist; und
- eine Sekundäruntersetzung, um eine Abtriebswelle (12) der Schaltanordnung (11) mit einem Antriebsrad (3) zu koppeln.

9. Antriebsanordnung nach Anspruch 8 , wobei die Antriebsanordnung an einer Hinterradschwinge (1), insbesondere zwischen Schwingarmen der Hinterradschwinge (1), angeordnet ist.

10. Zweirad mit einem an einer Hinterradschwinge (1) angeordneten Antriebsrad (3), das mit einer Antriebsanordnung nach Anspruch 8 oder 9 gekoppelt ist.

11. Verfahren zum Schalten einer Schaltanordnung nach einem der Ansprüche 1 bis 7, wobei zum Schalten in einer ersten Stellung das erste Hohlrad (23) blockiert und eine freie Drehung des zweiten Hohlrads (33) zugelassen wird, und in einer zweiten Stellung das zweite Hohlrad (33) blockiert und eine freie Drehung des ersten Hohlrads (23) zugelassen wird.

12. Verfahren zum Schalten einer Schaltanordnung (11) nach Anspruch 11 wobei ein Stellelement zwischen der ersten Stellung und der zweiten Stellung bewegt wird, wobei eine Zwischenstellung zwischen der ersten Stellung und der zweiten Stellung zum Einlegen eines Leerlaufs ausgewählt wird.
